# EUROPEAN PATENT APPLICATION

(11) **EP 1 848 233 A1**
(43) Date of publication of application: **24.10.2007**
(21) Application number: 05709877.4
(22) Date of filing: 08.02.2005
(51) Int. Cl.: H04Q 7/36

(54) **SLOT ALLOCATING METHOD IN CELLULAR RADIO COMMUNICATION SYSTEM, AND BASE STATION USED IN THE SYSTEM**

(71) Applicant: FUJITSU LIMITED, Kawasaki-shi, Kanagawa 211-8588 (JP)
(72) Inventor: SEKI, Hiroyuki c/o FUJITSU LIMITED, Kawasaki-shi, Kanagawa 2118588 (JP)
(74) Representative: Wilding, Frances Ward
(86) International application number: PCT/JP2005/001825
(87) International publication number: WO 2006/085353

(57) **Abstract**

In the base station for use in a cellular radio communication system, cell-reuse factors, which are information indicative of the number of different cell-reuse factors with respect to slots which are obtained by dividing a radio communication channel between the base station and the mobile station, are set in a mixed manner. The base station (1) has a use permission slot information storing unit (18) which stores use permission slot information about slots whose use is permitted to the base station (1), and a slot allocating unit (15, 16) which determines slots to be allocated to mobile stations (2) locating in a cell formed by the base station based on the use permission slot information in said use permission slot information storing unit (18). As a result, it is possible to avoid lowering of the transmission rate according to the distance from a base station (1), and fair radio resource allocation become possible. Further, without reducing throughput of the whole system, it is possible to realize high transmission rate communication for users located at cell edges far from base stations (1), without lowering throughput of the whole system.

## Description

### TECHNICAL FIELD

The present invention relates to a slot allocation method for use in a cellular radio communication system and a base station for use in the same system. In particular, the invention relates to technology suitable for use in a cellular radio communication system of a packet transmission type, which realizes multiple user multiplexing (Multiple Access) by means of dividing a radio communication channel into slots of predetermined time and frequency intervals and adaptively allocating multiple users with such slots.

### BACKGROUND ART

In packet transmission in a cellular mobile (radio) communication, a radio communication channel is divided into time slots of predetermined time intervals or frequency bands of predetermined band widths. A base station apparatus (hereinafter,will be also simply called the "base station") adaptively allocates traffic of multiple users [mobile station apparatus (hereinafter will be also simply called the "mobile station") to such divided slots, thereby realizing efficient packet transmission.

Packet transmission due to scheduling by the base station can be used in both of downlink (communication from base stations to mobile stations) and uplink (communication from mobile stations to base stations). The base stations perform scheduling in accordance with uplink and downlink traffic and communication quality. A scheduler allocates packets with priority to traffic (users) which requires high transmission rate and users which requests short transmission delay. Further, in order to improve throughput of the whole system, packets are allocated with priority to users good in communication quality. These weighting of priority is determined by the balance of the fairness of traffic to each user and total throughput.

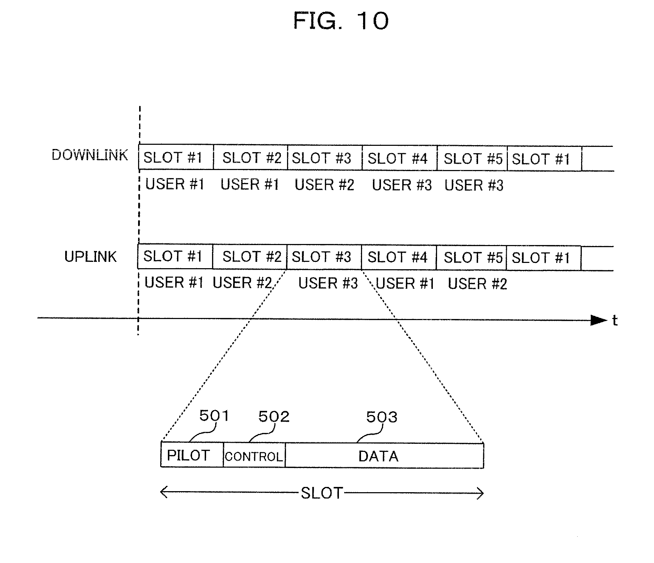

FIG. 10 shows an example of a construction of time slots of uplink and downlink. In FIG. 10, from slot #1 to #5, traffic of user #1, #2, and #3 is allocated by the schedulers of independent uplink and downlink. As shown in FIG. 10, a single slot is formed by a pilot symbol 501, a control symbol 502, and a data symbol 503.

The pilot symbol 501 is a symbol of a known pattern, and is used for estimating channel variation due to a propagation path on a receiver station and used for demodulating the control symbol 502 and the data symbol 503. The control symbol 502 includes user allocation information of the slot, the modulation scheme of the data symbol 503, packet number, communication quality feedback information, or the like.

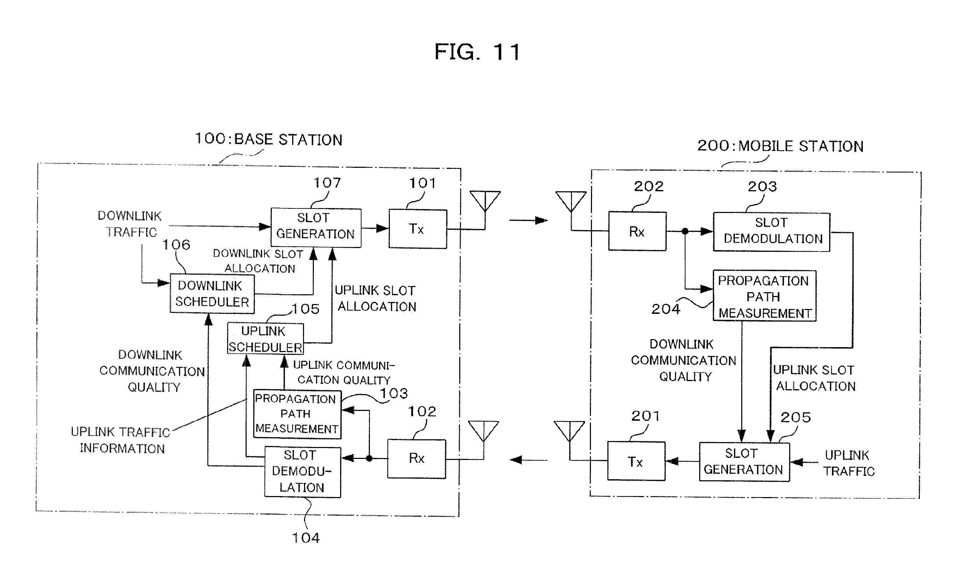

FIG. 11 shows a construction of a cellular mobile communication system including a base station 100 having uplink and downlink schedulers and at least a single mobile station 200 which is accessible to the base station 100. As shown in FIG. 11, the base station 100 includes, for example, a transmitter (Tx) 101, a receiver (Rx) 102, a propagation path measuring unit 103, a slot demodulator 104, an uplink scheduler 105, a downlink scheduler 106, and a slot generator 107. The mobile station 200 includes, for example, a transmitter (Tx) 201, a receiver (Rx) 202, a slot demodulator 203, a propagation path measuring unit 204, and a slot generator 205. In this instance, in the downlink traffic of the base station 100, traffic of multiple users (mobile stations 200) is present.

The downlink scheduler 106 of the base station 100 determines user allocation for slots on the basis of traffic information (request transmission rate and request traffic delay) of each user and downlink communication quality for each user which is fedback from the mobile station 200. The slot generator 107 generates slots shown in FIG. 10, and transmits them toward the mobile stations 200.

Here, the control symbol 502 of the slot contains uplink user allocation information determined by the uplink scheduler 105 of the base station 100.
The mobile station 200 demodulates downlink control symbol 502. When a slot is allocated to the mobile station 200, data symbol 503 of the slot is demodulated. Further, when the control symbol 502 contains uplink slot allocation information destined to the mobile station 200, the slot generator 205 generates an uplink slot, and transmits uplink data traffic.

Further, in the mobile station 200, the propagation path measuring unit 204 measures downlink communication quality (reception SIR: Signal to Interference Ratio) using the pilot symbol 501 of the downlink slot. The result is fedback to the base station 100 using a control symbol 502 of an uplink slot.
The base station 100 receives an uplink signal, and the slot demodulator 104 demodulates the control symbol 502, and notifies the downlink scheduler 106 of down link communication quality information contained in the control channel. In addition, uplink traffic information (request transmission rate and request delay) contained in the control symbol 502 is notified to the uplink scheduler 105. Further, the propagation path measuring unit 103 of the base station 100 measures uplink communication quality (reception SIR), and its result is notified to the uplink scheduler 105. Then, the uplink scheduler 105 determines uplink slot allocation using uplink traffic information and uplink communication quality of each user.

However, in cellular mobile communication, as the distance between a mobile station 200 and a base station 100 becomes larger, the reception signal level is lowered, and interference from other adjacent cells is increased, so that reception SIR is lowered. Accordingly, when a mobile station 200 is located in an area of cell edge, it is impossible to perform communication with a high transmission rate since the reception SIR is low. Further, in packet transmission described with reference to FIG. 10 and FIG. 11, since the schedulers 105 and 106 restrain the priority of slot allocation to users low in reception SIR, the throughput of users located at cell edge areas is not increased.

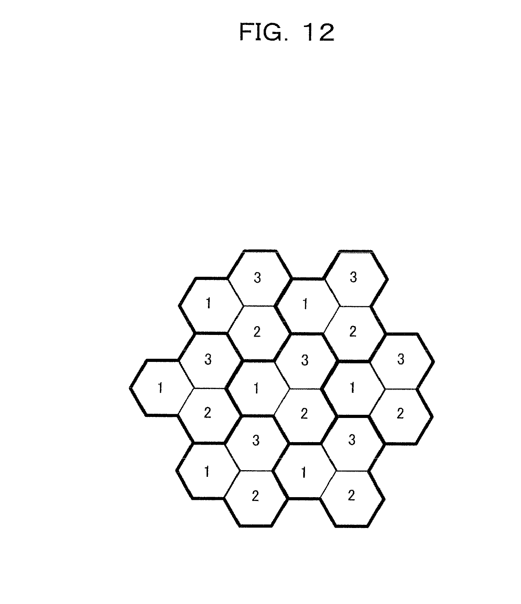

As a previous method for resolving the above issues, there is a method of using cell-reuse. FIG. 12 shows a cell construction of cell-reuse factor 3 (3 cell-reuse). Assuming there is a base station 100 at the center of each hexagonal cell, and the numbers of the cells indicates the slot number allocated. As shown in FIG. 12, since adjacent three cells use different slots, base stations 100 and mobile stations 200 in adjacent cells do not interfere with each other, and other cell interference is reduced and reception SIR is improved. However, for a single cell, only one slot out of the three slot, can be used. Thus, the slot use efficiency becomes one third, so that a total throughput is reduced.

Hence, for example, in the following patent document 1 (Japanese Patent Application Laid-open No. HEI 8-65738), each base station measures mutual interference with base stations surrounding the base station, and independently sets time slot to be used, using the measuring result. Then, between the base stations with large interference, mutually different time slots are allocated, and between the base stations with small interference, time slots are arbitrarily set. However, according to this technology in patent document 1, the mechanisms for measuring mutual interference with surrounding base stations and scheduling for allocation slots among base stations are necessary, impact given to the apparatus and the system is large.

Further, the following patent document 2 (Japanese Patent Application Laid-open No. 2000-102062) proposes that when a mobile station performs communication in an interference area such as a cell edge, a radio communication channel that is not used within all the service areas constructing this interference area (adjacent base stations) should be allocated. In addition, in patent document 2, when the identification number of the mobile station is received by more than one base station, the method for deciding that the mobile station is present in an interference area is proposed. However, technology of patent document 2 needs a mechanism for deciding not-used slot among adjacent base stations, so that impact given to the apparatus and the system is great.

Furthermore, the following patent document 3 (Japanese Patent Application Laid-open No. 2002-159048) proposes an easy method for reducing interference at cell edges. In patent document 3, a cell is divided into multiple sub-areas with a base station as a center, and each of the sub-areas is allocated with a specified time slot. Then, in adjacent cells, each sub-area is allocated with a different slot, thereby reducing interference from other cells. However, this technology assumes 1 cell-reuse, so that reduction effect to other cell interference is limited. Further, when applying this technology to downlink, it should be combined with transmission power control, so that transmission power to users near the base station need to be controlled to be suppressed.

In view of the above issues, the present invention is proposed, and the purpose of the invention is to make it possible to realize communication with high transmission rate for users (mobile stations) located at cell edges far from the base station, without reducing throughput of the whole system.
[Patent Document 1] Japanese Patent Application Laid-open No. HEI 8-65738
[Patent Document 2] Japanese Patent Application Laid-open No. 2000-102062
[Patent Document 3] Japanese Patent Application Laid-open No. 2002-159048

### DISCLOSURE OF THE INVENTION

In order to accomplish the above object, according to the present invention, there is provided slot allocation method for use in a cellular radio communication system in which a radio communication channel between a mobile station and a base station, forming a cell, is divided into predetermined slots, and the divided slots adaptively allocated to a plurality of mobile stations to realize radio multiple access, the method comprising: setting, in a mixed manner, cell-reuse factors, which are information indicative of the number of different cell reuse ratio with respect to the divided slots; and determining, on the base station, slots to be allocated to mobile stations located in a cell formed by the base station, based on the cell-reuse factor.

As a preferred feature, the slots can be time slots, which are obtained by dividing the radio communication channel into predetermined time intervals, or the slots can be obtained by dividing the radio communication channel into predetermined frequency intervals, or the slots can be obtained by dividing the radio communication channel in the two-dimensional direction of time and frequency.
As another preferred feature, the base station determines a slot to be allocated in accordance with communication quality between the base station and the mobile station. In this case, the base station can allocate a mobile station lower in the communication quality with a slot of a cell-reuse factor larger than a cell-reuse factor to be allocated to a mobile station higher in the communication quality.

As yet another preferred feature, the base station determines a slot to be allocated in accordance with a request transmission rate of the mobile station. In this case, the base station can allocate a mobile station higher in the request transmission rate with a slot lager in cell-reuse factor than a cell-reuse factor of a slot to be allocated to a mobile station lower in the request transmission rate.
As still another preferred feature, the base station determines a slot to be allocated to a mobile station in accordance with a distance of the mobile station from the base station. In this case, the base station can allocate a mobile station whose distance is larger with a slot of lager cell-reuse factor than cell-reuse factor of a slot to be allocated to a mobile station whose distance is smaller.

As a further feature, to a mobile station located at a handover area among a plurality of the base stations, a handover original base station and a handover destination base station can allocate a slot whose cell-reuse factor is not "1".
As a generic feature, there is provided a base station for use in a cellular radio communication system in which a radio communication channel between a mobile station and a base station, forming a cell, is divided into predetermined slots, and the divided slots adaptively allocated to a plurality of mobile stations to realize radio multiple access, the base station comprising: a use permission slot information storing unit which stores use permission slot information about slots whose use is permitted to the base station, by means of setting cell-reuse factors, in a mixed manner, which are information indicative of the different number of cell-reuse ratio, to the above divided slots; and a slot allocating unit which determines slots to be allocated to mobile stations locating in a cell formed by the base station based on the use permission slot information in the use permission slot information storing unit.

As a preferred feature, the slots can be time slots, which are obtained by dividing the radio communication channel into predetermined time intervals, or the slots can be obtained by dividing the radio communication channel into predetermined frequency intervals, or the slots can be obtained by dividing the radio communication channel in the two-dimensional direction of time and frequency.
As a preferred feature, the slot allocating unit is constructed so as to determine a slot to be allocated in accordance with communication quality between the base station and the mobile station. In this case, for example, the slot allocating unit can be constructed so as to allocate a mobile station lower in the communication quality with a slot whose cell-reuse factor is larger than a cell-reuse factor of a slot to be allocated to a mobile station higher in the communication quality.

As another preferred feature, the slot allocation unit is constructed so as to determine a slot to be allocated to mobile station in accordance with request transmission rate of the mobile station. In this case, for example, the slot allocation unit can be constructed so as to allocate a mobile station higher in the request transmission rate with a slot lager in cell-reuse factor than a cell-reuse factor of a slot to be allocated to a mobile station lower in the request transmission rate.
As yet another preferred feature, the slot allocation unit is constructed so as to determine a slot to be allocated to a mobile station in accordance with a distance of the mobile station from the base station. In this case, for example, the slot allocation unit can be constructed so as to allocate a mobile station whose distance is larger with a slot of lager cell-reuse factor than cell-reuse factor of a slot to be allocated to a mobile station whose distance is smaller.

According to the above-described invention, it is possible to resolve the problem of lowering of the transmission rate according to the distance from a base station, which is an issue unique to the packet scheduling-type communication scheme, and fair radio resource allocation becomes available. Further, without reducing throughput of the whole system, it is possible to realize high transmission rate communication for users located at cell edges far from base stations, without lowering throughput of the whole system.

### BRIEF DESCRIPTION OF THE DRAWINGS

FIG. 1 is a diagram showing a construction of a radio communication channel (time slots) for describing the principle of the present invention;
FIG. 2 is a diagram showing a construction of a radio communication channel (frequency band slots) for describing the principle of the present invention;
FIG. 3 is a diagram showing a construction of a radio communication channel (two-dimension divisional slots) for describing the principle of the present invention;
FIG. 4 is a diagram showing cell arrangement for describing the principle of the present invention;
FIG. 5 is a block diagram showing a construction of a cellular mobile (radio) communication system according to one preferred embodiment of the present invention;
FIG. 6 is a graph showing the relationship between a transmission rate and SIR used in the present embodiment;
FIG. 7 is a block diagram showing an example of construction of uplink and downlink schedulers in the base station of FIG. 5;
FIG. 8 is a flowchart for describing the procedure of slot allocation performed by the system (base station) of FIG. 5;
FIG. 9 is a diagram for describing the method of slot allocation during handover of a mobile station of the FIG. 5;
FIG. 10 is a diagram showing an example of a frame construction of uplink and downlink in the previous art;
FIG. 11 is a diagram showing an example of a construction of a previous packet mobile communication system; and
FIG. 12 is a diagram showing an example of cell arrangement in a previous packet mobile communication system.

### BEST MODE FOR CARRYING OUT THE INVENTION

Embodiments of the present invention will now be described with reference to the relevant accompanying drawings.

### [A] Overview (Principle) of the Present Invention

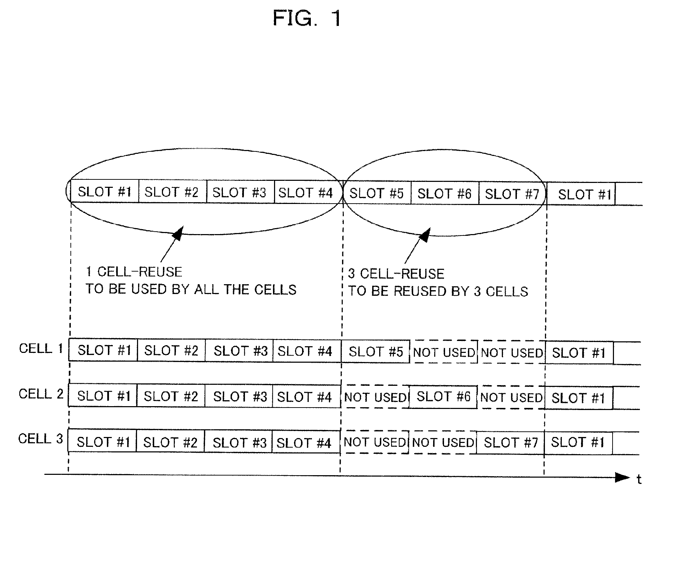

As shown in FIG. 1, a radio communication channel (radio resource) between a base station and a mobile station is divided into multiple time slots. For each of the time slots, a cell-reuse factor, which is information indicative of the number of cell-reuse factors, is determined beforehand, and the base station determines a slot to be allocated to each user (mobile terminal). In the example of FIG. 1, a frame construction in which slots #1 through #7 are repeatedly used, and the cell-reuse factor of slots #1 through #4 is determined as "1", and the cell-reuse factor of slots #5 through #7 is determined as "3".

That is, from slot #1 through #4, all the cells are usable. In slot #5, cell #1 is usable; in slot #6, cell #2 is usable; in slot #7, cell #3 is usable. These are determined beforehand. In other words, of the divided slots #1 through #7, the common slots #1 through #4 whose common use is permitted by multiple cells (base stations) and individual slots #5, #6, and #7 whose alone use is permitted by a single cell exist in a mixed manner.

At that time, cells #1 through #3 are arranged as shown in FIG. 12, for example. With this arrangement, it becomes possible for the base station to allocate a slot suitable for a user, out of slots #1 through #4 of 1 cell-reuse and slots #5, #6, and #7 of 3 cell-reuse. Here, in comparison with slots of 1 cell-reuse, 3 cell-reuse slots #5, #6, and #7, are reduced in other cell interference, thereby making it possible to realize high-quality communication, since cells generating interference are positioned at large distances.

For example, to a user who requires high transmission rate communication, the base station should allocate a slot of a cell-reuse factor larger than cell-reuse factors of slots to be allocated users who only require low transmission rate communication. Further, to a user who requires short transmission delay communication, such as real time traffic, the base station should allocate a slot of a cell-reuse factor lager than cell-reuse factors of slots to be allocated to users whose transmission delay can be large. Furthermore, slot allocation can be performed corresponding to the difference between the transmission rate required by a user and actual throughput. For example, to a user with a large difference, the base station should allocate a slot of a cell-reuse factor larger than cell-reuse factors of slots to be allocated to users with a smaller difference. That is, the base station determines slots to be allocated in accordance with required transmission rate.

In addition, the base station can determine slots to be allocated in accordance with communication quality (propagation path state) between the base station and a mobile station. For example, to a user whose communication quality (propagation path state) is poor (low), the base station should allocate a slot of a cell-reuse factor larger than a cell-reuse factor of slots to be allocated to users whose propagation path state is good. Here, for the decision of the propagation path condition, reception power, reception SIR, delay spread, or Doppler frequency can be used.

Further, the base station can determine a slot to be allocated in accordance with the distance of a mobile station from the base station. For example, a user located far from the base station, such as at a cell edge, is susceptible to interference by another cell. Thus, to a user located at a large distance from the base station, the base station should allocate a slot of a cell-reuse factor larger than the cell-reuse factor of a slot to be allocated to users located near the base station. Here, the locations of users can be measured using reception power, wave reach angle, reach time on the base station, or location information is notified from terminals equipped with GPS (Global Positioning System).

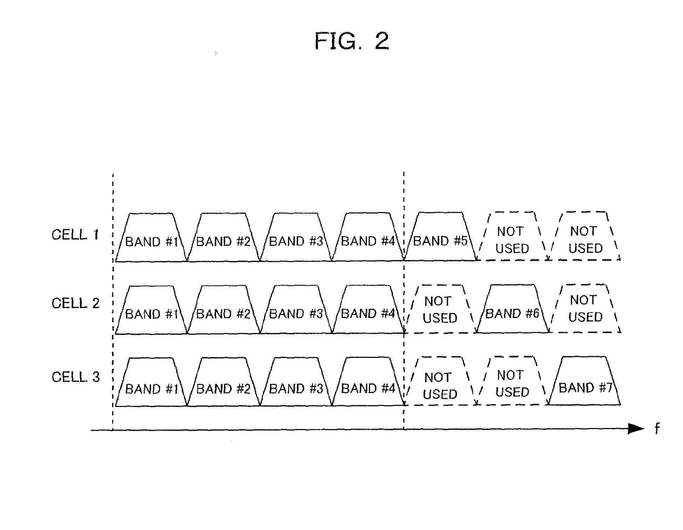

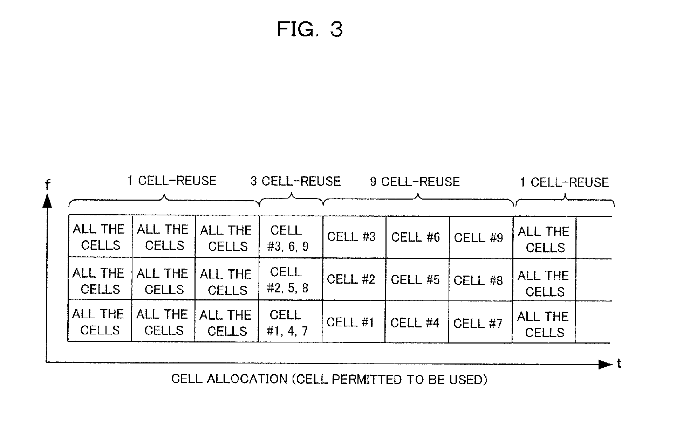

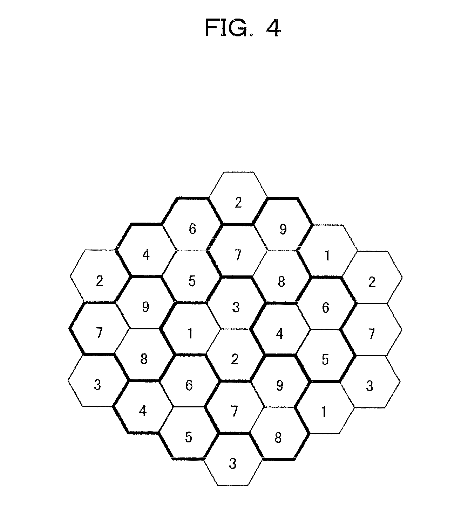

In the above example, slots are time slots which are divided in the time direction. However, as shown in FIG. 2, frequency bands can also be defined as slots, thereby performing slot allocation similar to that described in FIG. 1. In addition, as shown in FIG. 3, for example, slots divided in two-dimension of the time and frequency directions can be used. In FIG. 3, for each slot divided two-dimensionally, out of three types of cell-reuse factors, 1, 3, and 9, a predetermined cell-reuse factor is determined. Then, to the cell arrangement of FIG. 4, a slot position that each cell can use is determined beforehand.

In the example of FIG. 3, 3×3 (frequency direction × time direction) = 9 slots shown in the left side can be used by all the cells. Of the next 3×1=3 slots, slots of the highest frequency are usable by cells #3, #6, and #9; slots of the middle frequency are usable by cells #2, #5, and #8; slots of the lowest frequency are usable by cells #1, #4, #7; the remaining 3×3=9 slots are usable each by cell #1 through #9.

In this manner, according to the present invention, two-dimensional slot division is usable, and more than three types of cell-reuse factors can coexist.
In this manner, according to the present invention, each base station determines a slot to be used beforehand. Thus, an arrangement for adjusting allocation of slots between adjacent base stations, or a special device, such as base station control station, which instructs slot allocation to multiple base stations is not necessary. Hence, impact to devices and the system is small, so that the invention is realized in low cost. That is, the base station allocates each user with a slot so that a total of throughput is improved in accordance with the above-mentioned principle, out of slots which are determined to be used by the base station.

Further, in the previous art, cell-reuse factor = 1 is used so that all the cells can use the same slot for the purpose of improving a total of throughput, and transmission rate is adaptively determined in accordance with a distance from the base station and communication qualify. With this method, communication with high transmission rate is available for users located near the base station, but only communication with low transmission rate is available for users located at a cell edge far from the base station. In comparison with this, in the present invention, users located at a cell edge is allocated with a slot whose cell-reuse factor is larger than 1, so that interference of other cells is reduced, and communication of a transmission rate higher than the previous method is realized.

### [B] One Preferred embodiment

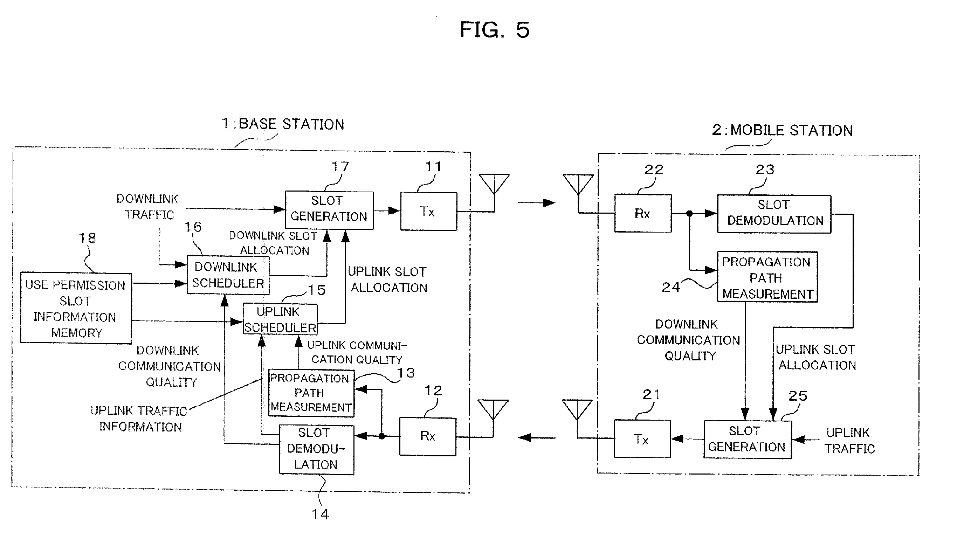

FIG. 5 is a diagram showing a construction of a cellular mobile (radio) communication system of one preferred embodiment of the present invention. Like the above-described system with reference to FIG. 11, the system of FIG. 5 includes a base station 1 and one or more mobile stations 2 which is accessible to the base station 1. Further, the base station has, for example, a transmitter (Tx) 11, a receiver (Rx)12, a propagation measuring unit 13, a slot demodulator 14, an uplink scheduler 15, a downlink scheduler 16, a slot generator 17, and a use permission slot information memory 18. A mobile station 2 includes, for example, a transmitter (Tx) 21, a receiver (Rx) 22,a slot demodulator 23, a propagation path measuring unit 24, and a slot generator 25. In this instance, in the present example, also, in the downlink traffic of the base station 1, traffic of multiple users (mobile stations 2) normally exists.

Here, in the base station 1, the transmitter 11 transmits downlink data [a pilot symbol (hereinafter will be simply called the "pilot") 501, a control symbol 502, and a data symbol 503 above-described with reference to FIG. 10], to the mobile stations 2 by radio. The transmitter 11 can perform transmission processing including required coding processing, modulation processing such as QAM and QPSK, digital-analogue conversion processing, frequency conversion (up conversion) processing, or the like. The receiver 12 receives uplink data (a pilot symbol 501, a control symbol 502, and a data symbol 503; transmitted from mobile stations 2 by radio. The receiver 12 can perform required receiving processing including required frequency conversion processing (down convert), orthogonal detection processing, analogue-digital conversion processing, channel estimation processing using pilot 501, demodulation processing, and decoding processing.

The propagation path measuring unit 13 measures a propagation path state between the base station and a mobile station 2 on the basis of a reception signal (uplink data) of the receiver 12. As described above, measurement is performed using reception power, reception SIR, delay spread, and Doppler frequency. Such estimation of propagation path information is performed using a pilot 501 inserted into a slot. The variation amount of the pilot 501 brought about by the propagation path, a channel estimation value is calculated. Then, reception power is calculated from the power of the channel estimation value, and the interference power is calculated from the dispersion of the channel estimation value, and reception SIR is obtained from a ratio therebetween. Further, a Doppler frequency is estimated from a phase change amount per unit time of the channel estimation value. Further, time correlation between the received pilot 501 and the known pilot is calculated, thereby obtaining delay profile.

The slot demodulator 14 demodulates each slot of uplink data received by the receiver 12. The slot demodulator 14 demodulates the above-mentioned control symbol 502, and notifies the downlink scheduler 16 of downlink communication quality information contained in a control channel, and also notifies the uplink scheduler 15 of uplink traffic information (request transmission rate and request delay) contained the control symbol 502.

The uplink scheduler (slot allocating unit) 15 allocates uplink slots, out of usable slots, in accordance with a predetermined scheduling method, to users (mobile stations 2) which are connected to the base station 1, on the basis of slot information predetermined as usable slots with respect to usable uplink and downlink, which is stored in the use permission slot information memory 18. Likewise, the downlink scheduler (slot allocation unit) 16 allocates downlink slots, out of usable slots, in accordance with a predetermined scheduling method, to users (mobile stations 2) which are connected to the base station 1, on the basis of slot information in the use permission slot information memory 18.

The slot generator 17 generates uplink and downlink slots (pilot symbol 501, control symbol 502, and data symbol 503) in accordance with slot allocation by the schedulers 15 and 16. The use permission slot information memory 18, as already described with reference to FIG. 1 (or FIG. 2 or FIG. 3) stores predetermined slot information which is slots usable by the base station 1.

On the other hand, in the mobile station 2, the transmitter (Tx) 21 transmits,by radio, uplink data (pilot symbol 501, control symbol 502, and data symbol 503), and performs required transmission processing including required coding processing, modulation processing such as QAM and QPSK, digital-analogue conversion processing, and frequency conversion (up conversion) processing, or the like. The receiver 22 receives downlink data (pilot symbol 501, control symbol 502, and data symbol 503) transmitted from the base station 1 by radio, and performs necessary reception processing including required frequency conversion processing (down conversion), orthogonal detection processing, analogue-digital conversion processing, channel estimation processing using a pilot, demodulation processing, and decoding processing.

The slot demodulator 23 demodulates each slot of downlink data received by the receiver 22. The slot demodulator 23 demodulates the above-mentioned symbol 502, and notifies the slot generator 25 of uplink slot allocation information contained in a control channel. In this instance, the slot demodulator 23 can demodulate (that is, monitor) all the downlink slots, or for the purpose of reducing power consumption, monitors at least slots (for example, in FIG. 1, in a case of a mobile station 2 in cell1 1 in FIG. 1, only slots 1 through 5 of all the slots 1 through 7) to be received (demodulated) by the mobile station 2.

The propagation path measuring unit 24 measures the propagation path state between mobile stations 2 and the base station on the basis of a pilot 501 contained in reception signal (downlink data) on the receiver 22. On the mobile station 2 end, it is possible to perform measurement using reception power, reception SIR, delay spread, Doppler frequency, or the like.
The slot generator 25 generates uplink slots (pilot symbol 501, control symbol 502, and data symbol 503) in accordance with the above mentioned slot allocation information (that is, slot information whose use is permitted by the base station 1) from the slot demodulator 23. At that time, the control symbol 502 stores downlink communication quality information measured by the propagation measuring unit 24, thereby feedbacking downlink communication quality to the base station 1.

That is, according to the packet mobile communication system of the present embodiment, only addition of the use permission slot information memory 18 to the system describedbefore with reference to FIG. 11 realizes a system having the features described in item [A].
Hereinafter, a description will be made of an operation of the packet mobile communication system of the present embodiment with the above construction. In particular, concrete slot allocation method (scheduling) will be detailed. In this instance, here, an example in which reception SIR for each user (mobile station 2) and request transmission rate are used as information necessary for slot allocation will be described.

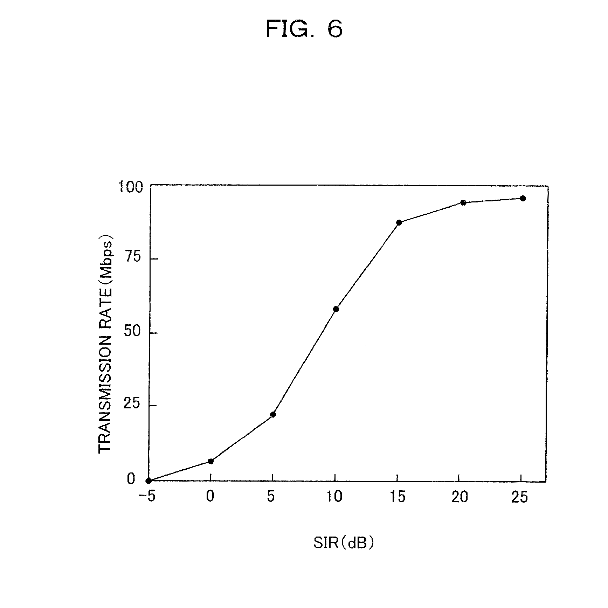

Generally speaking, in radio communication systems, a relationship between SIR and transmission rate is determined, as shown in FIG. 6, in accordance with the access method (CDMA or OFDM) and demodulation algorithm of a reception signal used in the system. The uplink and downlink schedulers 15 and 16 store the relationship shown in FIG. 6 in a memory or the like as a SIR/transmission rate conversion table, and calculates necessary SIR of each user based on the request transmission rate of each user.

That is, since the downlink scheduler 16 acknowledges the request transmission rate from the downlink traffic information, it can calculate required SIR based on that information. On the other hand, the uplink scheduler 15 receives traffic information (transmission rate request) from mobile stations 2, thereby calculating required SIR. In addition, the down scheduler 16 can obtain information of downlink reception SIR by feedback frommobile stations 2, and the uplink scheduler 15 can obtain information of uplink SIR measured on the base station 1.

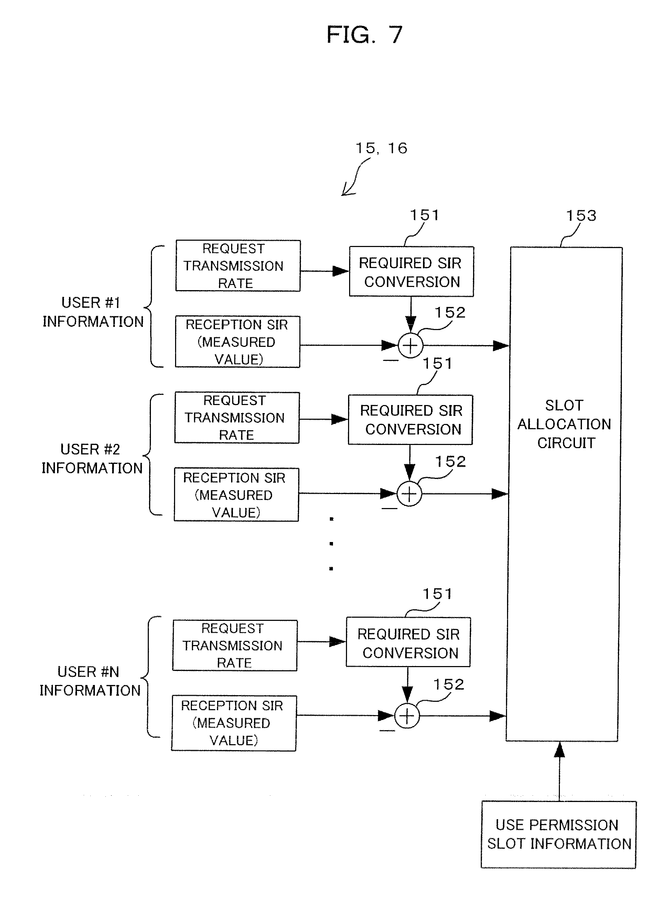

Then, the schedulers 15 and 16 obtain difference information between required SIR and actual reception SIR of all the users #1 through #N (N is a natural number) using the circuit shown in FIG. 7, for example. That is, each scheduler 15, 16 has the above-mentioned SIR/transmission rate conversion table for each user (mobile station 2), and has a required SIR conversion unit 151 which converts the required transmission rate into necessary SIR and a subtracter 152 which obtains a difference between this required SIR conversion unit 151 and an actual reception SIR (measurement value), and has a slot allocation circuit 153 which performs slot allocation to mobile stations 2 based on the subtraction result of each subtracter 152 and use permission slot information in the user permission slot information memory 18.

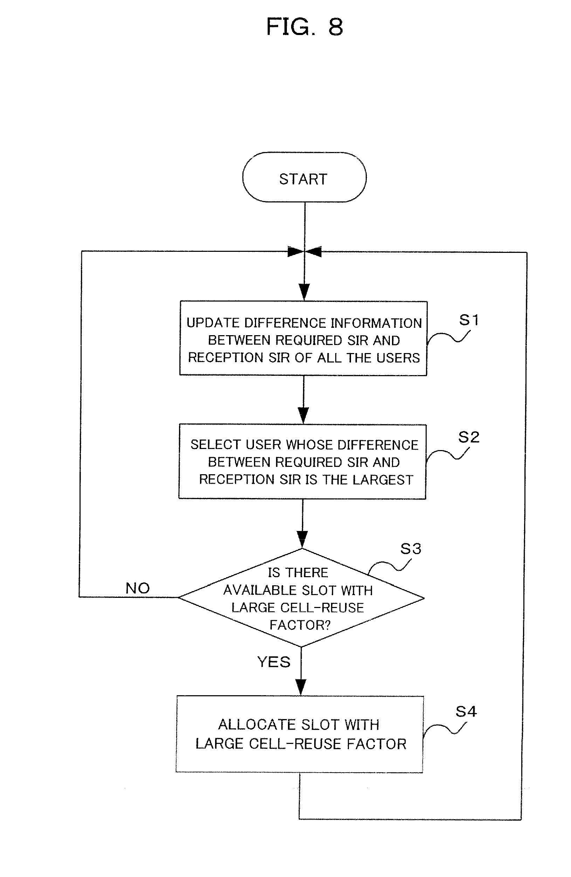

With this arrangement, according to the processing flow shown in FIG. 8, for example, the base station 1 allocates a slot of a large cell-reuse factor to a user with the largest difference between the required SIR and reception SIR. That is, the schedulers 15 and 16 update difference information between required SIR of all the users and reception SIR (measurement value) by the required SIR conversion unit 151 and the subtracter 152 (step S1), and the slot allocation circuit 153 selects a user with the largest difference information (step S2).

Then, the slot allocation circuit 153 evaluates whether or not emptiness exists in the slots (for example, slot 5 in cell 1 of FIG. 1) of large cell-reuse factor (other than "1") (step S3). If emptiness exists (YES at step S3), the slot is allocated to the user (step S4). In this instance, if there is no emptiness in slots of large cell-reuse factor (NO at step S3), the processing after the step S1 is repeated.

In this instance, if multiple types of slots with cell-reuse factor of other than "1" exist, like in a case where two-dimension divisional slots are used as divisional slots as described with reference to FIG. 3, it becomes a problem in which order to perform slot allocation. For example, a threshold value is provided for the above-mentioned difference information. If the difference information exceeds the threshold value, allocation begins from a slot of the largest cell-reuse factor. If the difference information is not greater than the threshold, allocation begins from a slot excepting a slot with the largest cell-reuse factor.

Each time difference information for the each user is updated (see step S1 of FIG. 8), it is possible to temporarily store and perform sorting, so that users with larger difference information are preferentially allocated with slots of lager cell-reuse factor. In addition, the priority (scheduling method) can be set freely, and it is possible to determine slots to be allocated in accordance with the priority.

Further, in the above description, as an example of slot allocation (scheduling), the method based on reception SIR and request transmission rate for each user (mobile station 2) is described. However, the above should by no means be limited to this, and various methods described in item [A] is applicable alone or in combination.

### [C] Slot Allocation during Handover

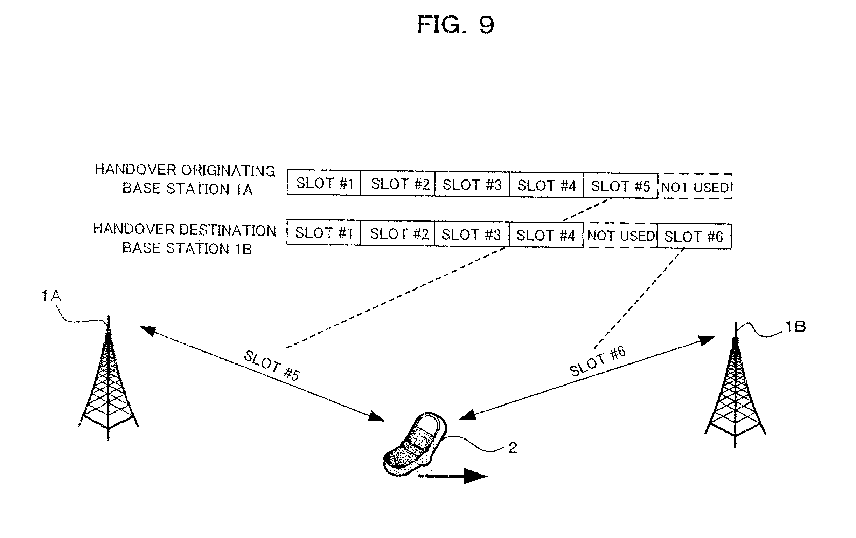

Next, referring to FIG. 9, slot allocation to a mobile station 2 during handover will be described.

A mobile station 2 is in a handover state (a state in which signals are received from multiple base stations 1 at the similar reception power in cell search, etc.), the mobile station 2 performs handover request to the original handover base station 1A and the handover destination base station 1B. The base station 1A and 1B which have received the handover request, allocates the mobile station 2 with a slot (individual slot) of cell-reuse factor larger than "1". In other words, in this case, the base stations 1A and 1B determine a slot to be allocated to the mobile station 2 in response to a handover request from the mobile station 2.

For example, as shown in FIG. 1, the mobile station 2, which is during handover, is allocated with slot #5 and slot #6, whose cell-reuse factor is larger than "1". Thus, the mobile station 2 can use both of the slots #5 and #6 allocated from the handover original base station 1A and the handover destination base station 1B. As a result, the mobile station 2 can not only improve throughput in the handover area, but also avoid packet loss generated at the time of handover switching. Further, since different slots #5 and #6 can be sequentially received (demodulated), only one receiver system (slot demodulator 23) is required, so that the mobile station 2 is downsized.

In this manner, according to the present invention, different cell-reuse factors are set in a mixed manner to slots obtained by dividing a radio communication channel (radio resource). Each base station determines a slot to be allocated to a mobile station, out of the slots whose use is permitted to the mobile station 2, in accordance with a predetermined scheduling method. Thus, an issue of reducing of transmission rate according to the distance from the base station 1, which is an issue unique to packet scheduling type communication schemes, is resolved, and fair radio resource allocation becomes available. Further, without reducing throughput of a total system, it becomes possible for a user who positions at a cell edge far from the base station 1 to perform communication with high transmission rate.

Further the present invention should by no means be limited to the above-illustrated embodiment, but various changes or modifications may be suggested without departing from the gist of the invention.
As described above, according to the present invention, fair radio resource allocation is available. Further, high transmission rate communication is available to users located at cell edges far from the base station without reducing throughput of the whole system. Thus, the present invention is significantly useful in the field of radio communication technology.

## Claims

1. A slot allocation method for use in a cellular radio communication system in which a radio communication channel between a mobile station and a base station, forming a cell, is divided into predetermined slots, and the divided slots adaptively allocated to a plurality of mobile stations to realize radio multiple access, said method comprising:
setting, inamixedmanner, cell-reuse factors, which are information indicative of the number of different cell-reuse ratio with respect to the divided slots; and
determining, on the base station, slots to be allocated to mobile stations located in a cell formed by the base station, based on the cell-reuse factor.

2. A slot allocation method for use in a cellular radio communication system as set forth in claim 1, wherein the slots are time slots, which are obtained by dividing the radio communication channel into predetermined time intervals.

3. A slot allocation method for use in a cellular radio communication system as set forth in claim 1, wherein the slots are obtained by dividing the radio communication channel into predetermined frequency intervals.

4. A slot allocation method for use in a cellular radio communication system as set forth in claim 1, wherein the slots are obtained by dividing the radio communication channel in the two-dimensional direction of time and frequency.

5. A slot allocation method for use in a cellular radio communication system as set forth in any one of claim 1 through claim 4, wherein the base station determines a slot to be allocated in accordance with communication quality between the base station and the mobile station.

6. A slot allocation method for use in a cellular radio communication system as set forth in claim 5, wherein the base station allocates a mobile station lower in the communication quality with a slot of a cell-reuse factor larger than a cell-reuse factor to be allocated to a mobile station higher in the communication quality.

7. A slot allocation method for use in a cellular radio communication system as set forth in any one of claim 1 through claim 4, wherein the base station determines a slot to be allocated in accordance with a request transmission rate of the mobile station

8. A slot allocation method for use in a cellular radio communication system as set forth in claim 7, wherein the base station allocates a mobile station higher in the request transmission rate with a slot lager in cell-reuse factor than a cell-reuse factor of a slot to be allocated to a mobile station lower in the request transmission rate.

9. A slot allocation method for use in a cellular radio communication system as set forth in any one of claim 1 through claim 4, wherein the base station determines a slot to be allocated to a mobile station in accordance with a distance of the mobile station from the base station.

10. A slot allocation method for use in a cellular radio communication system as set forth in claim 9, wherein the base station allocates a mobile station whose distance is larger with a slot of lager cell-reuse factor than cell-reuse factor of a slot to be allocated to a mobile station whose distance is smaller.

11. A slot allocation method for use in a cellular radio communication system as set forth in any one of claim 1 through claim 4, wherein to a mobile station located at a handover area among a plurality of the base stations, a handover original base station and a handover destination base station allocates a slot whose cell-reuse factor is not "1".

12. A base station for use in a cellular radio communication system in which a radio communication channel between a mobile station and a base station, forming a cell, is divided into predetermined slots, and the divided slots adaptively allocated to a plurality of mobile stations to realize radio multiple access, said base station comprising:
a use permission slot information storing unit which stores use permission slot information about slots whose use is permitted to the base station, by means of setting cell-reuse factors, in a mixed manner, which are information indicative of the different number of cell-reuse ratio, to the above divided slots; and
a slot allocating unit which determines slots to be allocated to mobile stations locating in a cell formed by the base station based on the use permission slot information in said use permission slot information storing unit.

13. A base station for use in a cellular radio communication system as set forth in claim 12, wherein the slots are time slots which are obtained by dividing the radio communication channel into predetermined time intervals.

14. A base station for use in a cellular radio communication system as set forth in claim 12, wherein the slots are obtained by dividing the radio communication channel into predetermined frequency intervals.

15. A base station for use in a cellular radio communication system as set forth in claim 12, wherein the slots are obtained by dividing the radio communication channel in the two-dimensional direction of time and frequency.

16. A base station for use in a cellular radio communication system as set forth in any one of claim 12 through claim 15, wherein said slot allocating unit is constructed so as to determine a slot to be allocated in accordance with communication quality between the base station and the mobile station.

17. A base station for use in a cellular radio communication system as set forth in claim 16, wherein said slot allocating unit is constructed so as to allocate a mobile station lower in the communication quality with a slot whose cell-reuse factor is larger than a cell-reuse factor of a slot to be allocated to a mobile station higher in the communication quality.

18. A base station for use in a cellular radio communication system as set forth in any one of claim 12 through claim 15, wherein said slot allocation unit is constructed so as to determine a slot to be allocated to mobile station in accordance with request transmission rate of the mobile station.

19. A base station for use in a cellular radio communication system as set forth in claim 18, wherein said slot allocation unit is constructed so as to allocate a mobile station higher in the request transmission rate with a slot lager in cell-reuse factor than a cell-reuse factor of a slot to be allocated to a mobile station lower in the request transmission rate.

20. A base station for use in a cellular radio communication system as set forth in any one of claim 12 through claim 15, wherein said slot allocation unit is constructed so as to determine a slot to be allocated to a mobile station in accordance with a distance of the mobile station from the base station.

21. A base station for use in a cellular radio communication system as set forth in claim 20, wherein said slot allocation unit is constructed so as to allocate a mobile station whose distance is larger with a slot of lager cell-reuse factor than cell-reuse factor of a slot to be allocated to a mobile station whose distance is smaller.
